# EUROPEAN PATENT APPLICATION

(11) **EP 4 711 979 A1**
(43) Date of publication of application: **18.03.2026**
(21) Application number: 24306521.6
(22) Date of filing: 16.09.2024
(51) Int. Cl.: G06K 19/077

(54) **ANTENNA TAG ELEMENT FOR IN-MOLD LABELING AND METHOD OF FORMING AN ANTENNA TAG ELEMENT FOR IN-MOLD LABELING**

(71) Applicant: Linxens Holding, 78200 Mantes-la-Jolie (FR)
(72) Inventor: Klemm, Lars, 01099 Dresden (DE)
(74) Representative: Grünecker Patent- und Rechtsanwälte PartG mbB

(57) **Abstract**

In some illustrative embodiments, an antenna tag element for in-mold labeling is provided. The antenna tag element comprises a carrier frame sheet body with an antenna pattern formed on at least one main surface of the carrier-frame body, wherein the carrier frame sheet body has at least one cut-out portion completely removing carrier frame sheet body material between the main surfaces of the body and being completely surrounded by the carrier frame sheet body. The antenna pattern is formed of an electrically conductive material formed on at least one of the main surfaces of the carrier frame sheet body, wherein the antenna pattern has at least one loop portion which surrounds at least one of the at least one cut-out portions. The carrier frame sheet body with the antenna pattern is laminated into a lamination material over the main surfaces of the carrier frame sheet body, the lamination material at least partially filling the at least one cut-out portion.

## Description

### Field of the Disclosure

The present disclosure relates to an antenna tag element for in-mold labeling and to a method of forming an antenna tag element for in-mold labeling.

### Technological Background

Labels on manufactured goods serve many purposes, including proper usage and handling instructions. Technological advancement has provided techniques like in-mold labeling, making it possible for products to carry labels easier, quicker, and more durable such that in-mold labeling increasingly enjoys a widespreading application across several industries, including logistics and packaging, food processing, consumer goods, and electronics.

Generally, a pre-printed label with a plastic part is arranged in a mold of an in-mold process for producing in-mold labels. Subsequently, the mold is infused with molten plastic during injection molding. After that, the label fuses with the plastic part, and on complete solidification when cooling.

In-molding is suitable for mass production because it involves injecting molten plastic material after inserting the label in the mold's hollow space, giving a product a high-quality finish without the need for post-production labeling. However, not all materials can be used for in-mold labeling and choosing the right material for the in-mold labeling type for your project is critical for the quality of an in-molded label such that only materials compatible molding processes can be used in in-mold labeling. For example, polypropylene is one of the leading materials used for in-mold labelling due to its strength, thermal properties, and versatility. Other materials employed in i-mold techniques are polyester and polyethylene as these materials have high durability, flexibility, and printability. These materials are suitable for molding projects with high temperature and pressure requirements as they can maintain their internal structural integrity in extreme temperatures.

Nonetheless, the compatibility of label material with different plastic materials is a critical consideration for IML procedures, knowing that some materials are incompatible with plastics. A case in point is using PP labels with suitable plastic materials like polyethylene and polypropylene, which are polyolefin plastics but not suitable for crystalline plastics like PET nylon and polycarbonate plastics. It is standard practice to carry out compatibility tests to ascertain the adhesion of the label and plastic materials to avoid defects like warping and other anomalies. As a substitute for popular label materials, certain substrate materials with suitable properties, including flexibility, good reflective properties, and strength, can be used in their stead. These substrate materials can be paper, metals, or even cardboard. Still, specific surface treatment will require these substrates to bond properly with the plastic material.

Ensuring the quality of a product is a critical part of most production processes, as defective products can hurt the company's reputation and, ultimately, the bottom line. Thus, knowing the right label materials to use depends on the plastic material selected for the product. Also, critically considering compatibility issues will ensure a quality finish with excellent durability for your in-mold label application as in-mold labelling is a complex manufacturing technology with the ultimate goal of assuring creation of a long-lasting product with a well-bonded label. Therefore, bonding between the material used in the molding process and the material of the label is a very important quality factors and the success of the molding process depends on the reliability of a label's adherence to a product to be labelled.

In order to determine the integrity of a label's bonding characteristic with respect to a product, the label's compatibility with the product's plastic substance is a critical inspection criterion. Thus, a high adhesion of the label to the product to be labelled is ensured when using materials like polypropylene and polyethylene for the label and the in-molding process because then defects like warping and bubbles may be avoided, these defects reducing the label's adhesion properties

Upon labels being increasingly employed in fields such as logistics and packaging, food processing, consumer goods, etc., the labels are used for tracking, tracing, and monitoring of labelled products. In this context, RFID labels are more often employed as it offers advantages in automation and contactless label monitoring and/or tracking. RFID labels are a special type of label containing a chip and an RFID antenna, these labels using radio waves to communicate information to other devices used for reading RFID labels. For examples, Ultra High Frequency (UHF) RFID labels are a special type of RFID label with the advantages of long read ranges and fast read rates, e.g., employed in supply chain management for tracking products and materials throughout the supply chain with the possibility of providing real-time visibility.

Typically, UHF RFID labels are comprised of an RFID UHF inlay and blank printable paper, whereas other RFID labels are comprised of an PET substrate equipped with an RFID inlay. However, these materials of RFID labels are not compatible with the materials used in the fabrication of in-mold labels as pointed out above, e.g., like polyolefine, polypropylene or polyethylene, resulting in defective labels when in-molding RFID labels, such as occurrence of bubbles and poor optical quality during molding.

Adapting the substrate material of RFID labels to comply with an in-mold material, e.g., forming an antenna on an RFID label substrate of an in-mold material, such as polyolefine, polypropylene or polyethylene, is not desirable for economic reasons. For example, a possible solution of a silver antenna on a polyolefine, polypropylene or polyethylene substrate results in high fabrication costs and unacceptable small process windows (IC assembly).

In view of the above described situation, it is desirable to provide an antenna tag element for in-mold labeling and to a method of forming an antenna tag element for in-mold labeling for overcoming the above described issues without negatively affecting the quality of in-mold labels and in-mold products equipped with such labels.

### Summary of the Disclosure

The issues and problems described in the context of the technological background of the present disclosure are at least partially resolved by an antenna tag element for in-mold labeling in accordance with claim 1 and a method of forming an antenna tag element for in-mold labeling in accordance with claim 10. Further advantageous embodiments of the antenna assemblies are defined in the dependent claims 2 to 9 and 11 to 17.

In a first aspect of the present disclosure, an antenna tag element for in-mold labeling is provided. The antenna tag element comprises a carrier frame sheet body with an antenna pattern formed on at least one main surface of the carrier-frame body, wherein the carrier frame sheet body has at least one cut-out portion completely removing carrier frame sheet body material between the main surfaces of the body and being completely surrounded by the carrier frame sheet body. The antenna pattern is formed of an electrically conductive material formed on at least one of the main surfaces of the carrier frame sheet body, wherein the antenna pattern has at least one loop portion which surrounds at least one of the at least one cut-out portions. The carrier frame sheet body with the antenna pattern is laminated into a lamination material over the main surfaces of the carrier frame sheet body, the lamination material at least partially filling the at least one cut-out portion. The lamination material may be a material compatible with in-molding, i.e., an in-mold material such as polyolefine, polypropylene, polyethylene.

Accordingly, the antenna tag element for in-mold labelling may be an RFID label for in-molding with an RFID label. Herein, the antenna tag element may be laminated into a material compatible with in-molding so as to avoid occurrence of defects caused by the RFID label when subjected to an in-molding process. The at least one cut-out portion which completely removes the carrier frame sheet body material (thus creating a through hole in the cut-out portion of the carrier frame sheet body) reduces a surface of the carrier frame sheet body and thereby reduces the occurrence of defects during molding, e.g., bubbles and poor optical quality. For example, an amount of optional adhesive applied to the carrier frame sheet body for increasing a bonding between the carrier frame sheet body and the lamination material is thus reduced as it is not present in the at least one cut-out portion, thus, avoiding an outgassing of adhesive during lamination or in-molding. In some special illustrative embodiments, the carrier frame sheet body is substantially congruent with the antenna pattern. For example, the carrier frame sheet body may be present to a minimal extent for supporting the antenna pattern and providing a self-supporting carrier frame sheet body with cut-out portion(s) and antenna pattern thereon, yet without lamination material, whereas the lamination material may add to the self-supporting characteristic of the antenna tag element.

In the present disclosure, a length direction of the antenna tag element may be understood as a direction among mutual perpendicular directions indicating length, width, and thickness of the antenna tag element. The length direction is oriented parallel to an extension direction of at least one linear line portion of the antenna pattern and along which a maximum dimension of the antenna tag element is measured when compared to width and thickness dimensions. The thickness direction is perpendicular to length and width, the antenna pattern having a minimum dimension measured along the thickness direction. The width direction is perpendicular to the thickness direction and the length direction.

In some illustrative embodiments of the first aspect, the carrier frame sheet body may be composed of plural frame bars bordering the at least one cut-out region. Each frame bar may have one line portion or no line portion or at most two line portions or at most three line portions or at most four line portions of the antenna pattern routed thereon. Furthermore, each frame bar may have a width dimension of at most 30% or 20% or 15% or 10% or 5% greater than a width dimension of an associated line portion(s) of the antenna pattern routed on the respective frame bar. In other words, each frame bar is substantially congruent with the respective line portion(s) formed on the dedicated frame bar

In some special illustrative examples herein, the antenna pattern may be formed only of line portions, each line portion formed on a dedicated frame bar, wherein each frame bar is substantially congruent with the respective line portion(s) formed on the dedicated frame bar. In a special illustrative example, the frame bars may be purely linearly extending bars.

In some special illustrative examples herein, the antenna pattern may comprises plural antenna routing portions extending at least partially along each frame bar, wherein each frame bar has a width substantially matching with a width of an associated antenna routing portion. "Substantially matching" may be understood as indicating "substantially congruent". For example, "substantially matching" may be understood as indicating that the width of an antenna routing portion corresponds to at least 75% or at least 80% or at least 90% or at least 95% or at least 97% of the width of an associated frame bar.

Accordingly, a surface of the carrier frame sheet body may be minimized such that cut-out portions remove surface portions which are not used for supporting the antenna pattern, i.e., surface portions of the carrier frame sheet body delineated by the antenna pattern.

In some special illustrative examples herein, a subset of the plural frame bars may be uncovered by the antenna pattern. The uncovered frame bar(s) may be provided for increasing a self-supporting characteristic of the carrier sheet frame body with antenna pattern such that a kinking of the carrier frame sheet body is avoided where the kinking may be understood as indicating a strong bending of the carrier sheet frame body with potential breaking of the antenna pattern upon such a strong bending of the carrier sheet frame body. For example, two frame bars associated with a cut-out portion (and which may optionally extend at least partially in parallel) may be mechanically connected along a transverse direction to the parallel extending direction by at least one uncovered frame bar acting as a purely mechanically supporting frame bar. For example, a cut-out portion which is only partially surrounded by the antenna pattern, is completely surrounded by frame bars, e.g., any cut-out portion may be completely surrounded by frame bars comprising at least one supporting frame bar.

In some illustrative embodiments of the first aspect, the antenna pattern may comprise plural antenna loop portions being electrically connected by plural antenna interconnection lines, wherein at least one antenna interconnection line of the plural antenna interconnection lines extends between two neighboring antenna loop portions. Each antenna interconnection line may represent a line portion of the antenna pattern, such as a linear line portion or a line portion which is at least partially curved. Accordingly, multiple interconnected loops may be provided. In some special illustrative examples herein, a cut-out portion bordering a frame bar having an interconnection line formed thereon, may border a supporting frame bar. For example, the supporting frame bar may be at least in part extending in parallel with the frame bar having an interconnection line formed thereon. Accordingly, a mechanical stability of the carrier frame sheet body is not deteriorated by the interconnected loops.

In some special illustrative examples herein, the antenna pattern may have a rectangular shape, wherein the plural antenna loop portions are arranged in a series arrangement along a length direction of the antenna pattern, the antenna interconnection lines connecting two adjacent antenna loops in a series connection.

In some special illustrative examples herein, at least two adjacent antenna loops may be mechanically connected by a frame bar which remains uncovered by the antenna pattern. This frame bar may be a supporting frame bar, thus increasing a mechanical stability of the carrier frame sheet body with plural interconnected loops.

In some illustrative embodiments of the first aspect, the carrier frame sheet body may comprise PET and/or paper, and the antenna pattern is formed of an Al and/or Cu routing pattern formed on the carrier frame sheet body. Accordingly, the antenna tag element may be compatible with RFID devices.

In some illustrative embodiments of the first aspect, the lamination material may comprise at least one of PP, PE and any plastic material suitable for injection molding. Accordingly, the antenna tag element may be compatible with in-molding techniques.

The first aspect may provide in some illustrative examples of the above disclosed embodiments a structure, comprising narrow punched conductive lines of HF/UHF antennas on the carrier frame sheet body, e.g., PET/paper, laminated into plain lamination material, e.g., PE/PP material, w/o the need of using an adhesive during hot-lamination, where narrow punched indicates that conductive lines may be substantially congruent with punched carrier frame sheet body.

In at least some of the above disclosed embodiments of the first aspect, a bonding quality may be improved by using an adhesive, e.g., AI-PET-adhesive (supplier), additionally on back side of the carrier frame sheet body, e.g., a PET/paper-backside, where backside indicates a main surface (i.e., a surface parallel to a plane spanned by length and width) opposite a main surface on which the antenna pattern is formed.

In at least some of the above disclosed embodiments of the first aspect, stability bars may be used by supporting bars in the antenna pattern, such as an asymmetric UHF antenna pattern, to support handover process from liner to sandwich foil.

In at least some of the above disclosed embodiments of the first aspect, a shape of a tailing bar may be punched to "collect" bubbles caused by R2R hot lamination outside the label area, for example.

In at least some of the above disclosed embodiments of the first aspect, the lamination material may have perforations formed therein, e.g., perforations in the inner PE/PP-layer. Additionally or alternatively, a lamination material mesh, e.g., a mesh, may be used for lamination, or a material that is permeable to air but suitable for in-mold processes could be used as the lamination material to avoid creation of air bubbles in the antenna tag element after lamination. In some other illustrative examples a foam, e.g., a solid foam formed of an open-cell solid foam material, or a fleece may be used. The material of any kind of mesh, foam, and fleece may be a thermoplastic material, such as PP and/or PE in some illustrative but non-limiting examples. Any of the mesh, foam, and fleece may additionally have perforations formed therein or exposed to an optional perforation process for forming optional perforations therein. In some special illustrative example, a PET fleece material may be used.

In a second aspect of the present disclosure, a method of forming an antenna tag element for in-mold labeling is provided. In the illustrative embodiments of the second aspect, the method comprises providing an antenna carrier sheet or web body with at least one antenna pattern formed on at least one main surface of the carrier-frame sheet body, subjecting the antenna carrier sheet or web body to a cutting process, e.g., punching, cutting, etc., for forming at least one cut-out portion within one or more antenna loop portions of the at least antenna pattern, subjecting the antenna carrier sheet or web body to a lamination process subsequent to the cutting process, the lamination process comprising arranging the antenna carrier sheet or web body between two lamination sheet layers and subjecting this arrangement to a fusing process, preferably at least one of the lamination sheet layers being subjected to a perforation process for forming a distribution of perforations along the at least one of the lamination sheet layers.

In some special illustrative example using a PET fleece material, the PET fleece material may not be melting during lamination, i.e., hot roll or press lamination. However, outer PP layers between which the PET fleece material may be sandwiched, may be melting partially trough the fibers of the PET fleece material and will hold it proper. Similarly, a final injection molding would do the same such that it will flow into cavities between fibers of the fleece material and, after cooling/curing, it will hold the whole label.

Accordingly, the method may fabricate an antenna tag element for in-mold labelling, e.g., an RFID label for in-molding with an RFID label. Herein, the antenna tag element may be laminated into a material compatible with in-molding so as to avoid occurrence of defects caused by the RFID label when subjected to an in-molding process. The at least one cut-out portion which completely removes the material of antenna carrier sheet or web body (thus creating a through hole in the cut-out portion of the carrier frame sheet body) reduces a surface of the antenna carrier sheet or web body and thereby reduces the occurrence of defects during molding, e.g., bubbles and poor optical quality. For example, an amount of optional adhesive applied to the antenna carrier sheet or web body for increasing a bonding between the antenna carrier sheet or web body and the lamination sheet layers is thus reduced as it is not present in the at least one cut-out portion, thus, avoiding an outgassing of adhesive during lamination or in-molding. In some special illustrative embodiments, the antenna carrier sheet or web body after the cutting process is substantially congruent with the antenna pattern. For example, the antenna carrier sheet or web body after the cutting process may be present to a minimal extent for supporting the antenna pattern and providing a self-supporting carrier frame sheet body with cut-out portion(s) and antenna pattern thereon, yet without lamination material, whereas the lamination material may add to the self-supporting characteristic of the antenna tag element.

In some illustrative embodiments of the second aspect, the method may be employed in a reel-to-reel process with the antenna carrier sheet or web body being provided by supplying an antenna carrier web supplied by a respective carrier web supply reel. Accordingly, an easy fabrication process with high volume may be realized.

In some other illustrative embodiments of the second aspect, the lamination sheet layers may be provided as upper and lower lamination sheet material webs supplied by respective lamination material supply reels. In this case, the method uses antenna carrier web instead of an antenna carrier sheet such that a R2R process may be easily realized.

In some other illustrative embodiments of the second aspect, the cutting process may comprise a cut-out portion cutting process and an antenna pattern cutting process in which each antenna pattern of the at least one antenna pattern is cut out from surrounding material of the antenna carrier sheet or web body. In this two-stage cutting process completely cut out antenna patterns on individual carrier sheet frame bodies may be achieved.

In some illustrative examples herein, the cut-out portion cutting process may comprise providing adhesive on a first side of the antenna carrier sheet or web body, cutting along cutting lines within the one or more antenna loop portions for cutting out antenna carrier sheet or web body material within the one or more antenna loop portions, and removing the one or more cut-out antenna carrier sheet or web body materials within the one or more antenna loop portions by bringing the first side into contact with a cut-out-removing sheet or web supplied to and removed from the first side. As an alternative to providing adhesive to the first side of the antenna carrier sheet or web body, the cut-out-removing sheet or web may be a low sticky tape sheet or web. The term "low sticky" means that no residue remains when removing the low sticky tape sheet or web from a surface which is in sticking contact with the low sticky tape sheet or web.

In some other illustrative examples herein, the cut-out portion cutting process may comprise providing adhesive on a second side of the antenna carrier sheet or web body opposite the first side, cutting along cutting lines completely surrounding each antenna pattern of the at least one antenna pattern loop portions for cutting out the antenna pattern from surrounding carrier sheet or web body material, and removing the at least one antenna pattern from cut carrier sheet or web body material by bringing the second side into contact with an antenna pattern support sheet or web supplied to and removed from the second side along with the removed at least one antenna pattern on the antenna pattern support sheet or web. As an alternative to providing adhesive to the on a second side of the antenna carrier sheet or web body, the antenna pattern support sheet or web may be a low sticky tape sheet or web. The term "low sticky" means that no residue remains when removing the low sticky tape sheet or web from a surface which is in sticking contact with the low sticky tape sheet or web.

In some illustrative examples herein, adhesive may be provided by the cut-out-removing sheet or web on a surface of the cut-out-removing sheet or web facing towards the first side and/or adhesive may be provided by the antenna support sheet or web on a surface of the antenna support sheet or web facing towards the second side, preferably the cut-out-removing sheet or web and/or the antenna support sheet or web being a low-sticky or low-adhesive tape.

In some illustrative examples herein, the method may further comprise supplying the at least one antenna pattern to the lamination process via the antenna support sheet or web, guiding the antenna support sheet or web around a turn or kink reversing an antenna support supply direction by an angle of less than 180°, preferably less than 120° or less than 100° or less than 90° or less than 60° or less than 40° or less than 30° or less than 20° or less than 15° or less than 10°. In case of using a low sticky tape for the antenna support sheet or web, the at least one antenna pattern may be provided to the lamination process without residue of adhesive on a surface of the antenna pattern. Accordingly, outgassing caused by reside of adhesive material exposed to the lamination process may be avoided.

The second aspect may provide in some illustrative examples of the above disclosed embodiments a method, comprising punching of smaller antenna parts including PET/paper carrier (final antenna shape etched), and/or punching of smaller antenna parts including PET/paper carrier (final antenna shape punched), and/or self-peeling of inlay from a low-sticky liner and transfer into a PP or PE sandwich foil using hot lamination.

### Brief Description of the Drawings

Various illustrative embodiments and other advantages of the various aspects of the present disclosure will become apparent from the detailed description of the accompanying Figures as presented below.
Figure 1 schematically shows an antenna tag element in accordance with some illustrative embodiments of the present disclosure.
Figure 2 schematically shows an antenna tag element in accordance with some other illustrative embodiments of the present disclosure.
Figure 3 schematically shows a some stages of a process of manufacturing antenna tag elements in accordance with some illustrative embodiments of the present disclosure.
Figure 4 schematically shows a some other stages of a process of manufacturing antenna tag elements in accordance with some illustrative embodiments of the present disclosure.
Figures 5a to 5e 4 schematically shows sheets or webs employed or obtained in the various stages of the process stages shown in Figures and 4.

The Figures accompanying the present disclosure are only provided for schematically showing some concepts and aspects of the present disclosure without showing all possible details of certain embodiments and without necessarily being to scale.

### Detailed Description of Preferred Embodiments

The illustrative embodiments described below relate to an antenna tag element and a method of fabricating antenna tag elements in various aspects of the present disclosure. Although embodiments below are described with respect to an antenna tag element, this does not impose any limitation and another type of tag element having an IC component and/or a chip component for lamination to include into in-molding processes may be used.

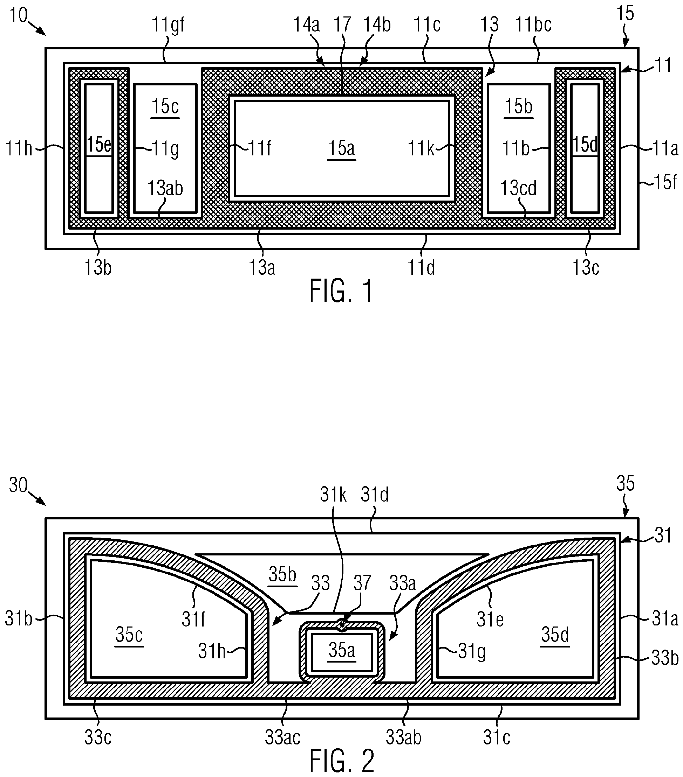

Figure 1 schematically shows an antenna tag element 10 in accordance with some illustrative embodiments of the present disclosure, the antenna tag element 10 being suitable for in-mold labeling. The antenna tag element 10 comprises a carrier frame sheet body 11 with an antenna pattern 13 formed on a main surface of the carrier-frame body 11. This does not impose any limitation and the antenna pattern 13 may be provided on two main surfaces, vertically interconnected by vias (not illustrated) extending along a thickness direction of the carrier frame sheet body 11 through the carrier frame sheet body 11 between the two opposing main surfaces.

As shown in Figure 1, the carrier frame sheet body 11 comprises frame bars 11a, 11b, 11c, 11d, 11e, 11f, 11g, 11h, 11k. The frame bars 11a to 11h define cut-out portions 15a, 15b, 15c, 15d, 15e in the carrier frame sheet body 11. The frame bars 11a, 11b, 11d, and 11c define the cut-out portion 15d, the cut-out portion 15d surrounded by the frame bars 11a, 11b, 11d, and 11c. The frame bars 11b, 11k, 11d, and 11c define the cut-out portion 15b, the cut-out portion 15b surrounded by the frame bars 11b, 11k, 11d, and 11c. The frame bars 11k, 11f, 11d, and 11c define the cut-out portion 15a, the cut-out portion 15a surrounded by the frame bars 11k, 11f, 11d, and 11c. The frame bars 11f, 11g, 11d, and 11c define the cut-out portion 15c, the cut-out portion 15c surrounded by the frame bars 11f, 11g, 11d, and 11c. The frame bars 11h, 11g, 11d, and 11c define the cut-out portion 15e, the cut-out portion 15e surrounded by the frame bars 11h, 11g, 11d, and 11c. The cut-out portions 15a, 15b, 15c, 15d, 15e represent portions in which material of the carrier frame sheet body 11 is completely removed between the main surfaces of the carrier frame sheet body 11.

The antenna pattern 13 is formed of an electrically conductive material (such as at least one of Cu, Al, etc. and an alloy thereof) formed on the carrier frame sheet body 11. The antenna pattern 13 has a loop portion or loop 13a which surrounds the cut-out portion 15a, a loop 13b which surrounds the cut-out portion 15e, and a loop 13c which surrounds the cut-out portion 15d. The loop 13a is electrically interconnected with the loop 13b by an antenna interconnection line 13ab and the loop 13a is electrically interconnected with the loop 13c by an antenna interconnection line 13cd, the loops 13a to 13c being connected in series by the antenna interconnection lines 13ab und 13cd.

With ongoing reference to Figure1, the frame bar 11c has a support frame bar 11gf extending between the loop 13a and the loop 13b opposite to the frame bar 11d carrying the antenna interconnection line 13ab along a width direction of the antenna tag element 10 and in parallel therewith. The frame bar 11c further has a support frame bar 11bc extending between the loop 13a and the loop 13c opposite to the frame bar 11d carrying the antenna interconnection line 13cd along the width direction of the antenna tag element 10 and in parallel therewith. The support frame bars 11bc and 11gf provide mechanical stability to the antenna tag element 10 and avoid a kinking of the antenna pattern 13 at the antenna interconnection lines 13ab and 13cd. Furthermore, the antenna pattern 13 has antenna terminals 14a and 14b at the loop 15a which are separated by a gap 17 for accommodating an RFID chip (not illustrated) to be electrically coupled to the antenna terminals 14a and 14b.

The support frame bar 11bc and 11gf may be considered as representing a subset of the plural frame bars 11a to 11k of frame bars and are uncovered by the antenna pattern 13. The uncovered frame bars 11be and 11gf are provided for increasing a self-supporting characteristic of the carrier sheet frame body 11 with antenna pattern 13 such that a kinking of the carrier frame sheet body 11 is avoided where the kinking may be understood as indicating a strong bending of the carrier sheet frame body 11 with potential breaking of the antenna pattern 13 upon such a strong bending of the carrier sheet frame body 11. As shown in Figure1, the frame bars 11be and 11gf extend in parallel with the frame bar 11d and mechanically connect the loops 13a to 13c along the frame bar 11c in a transverse direction to the frame bars 11g, 11f, 11k, 11b.

In accordance with illustrative embodiments, the antenna tag element 10 may be laminated into a lamination material 15 over carrier frame sheet body 11 and the antenna pattern 13. The lamination material 15 completely fills the cut-out portions 15a, 15b, 15c, and 15d. The lamination material 15 may be a material compatible with in-molding, i.e., an in-mold material such as polyolefine, polypropylene, polyethylene.

In some illustrative embodiments, the antenna tag element 10 may be an RFID label suitable for in-molding to equip a product (not illustrated) with an RFID label. The antenna tag element 10 laminated into a material such that the occurrence of defects is avoided when subjecting the antenna tag element 10 to an in-molding process. In particular, the portions 15a to 15d do not have air bubbles.

As shown in Figure1, the frame bars 11a to 11k are narrowly cut-out or substantially congruent with the antenna pattern 13. In other words, each of the frame bars 11a to 11k may have a width dimension of at most 30% or 20% or 15% or 10% or 5% greater than a width dimension of an associated of line portions of the antenna pattern 13. Thus, the frame bars 11a to 11k may substantially match with the antenna pattern 13.

Figure 2 schematically shows an antenna tag element 30 in accordance with some other illustrative embodiments of the present disclosure, the antenna tag element 30 being suitable for in-mold labeling. The antenna tag element 30 comprises a carrier frame sheet body 31 with an antenna pattern 33 formed on a main surface of the carrier-frame body 31. This does not impose any limitation and the antenna pattern 33 may be provided on two main surfaces, vertically interconnected by vias (not illustrated) extending along a thickness direction of the carrier frame sheet body 31 through the carrier frame sheet body 31 between the two opposing main surfaces.

As shown in Figure 2, the carrier frame sheet body 31 comprises frame bars 31a, 31b, 31c, 31d, 31e, 31f, 31g, 31h, 31k. The frame bars 31a to 31h define cut-out portions 35a, 35b, 35c, 35d in the carrier frame sheet body 31. The frame bars 31a, 31c, 31e, and 31g define the cut-out portion 35d, the cut-out portion 35d surrounded by the frame bars 31a, 31c, 31e, and 31g. The frame bars 31c, 31k, 31g, and 31h define the cut-out portion 35b, the cut-out portion 35b surrounded by the frame bars 31c, 31k, 31g, and 31h. The frame bars 31k, 31g, 31h, and 31c define the cut-out portion 35a, the cut-out portion 35a surrounded by the frame bars 31k, 31g, 31h, and 31c. The frame bars 31f, 31h, 31b, and 31c define the cut-out portion 35c, the cut-out portion 35c surrounded by the frame bars 31f, 31h, 31b, and 31c. The cut-out portions 35a, 35b, 35c, 35d represent portions in which material of the carrier frame sheet body 31 is completely removed between the main surfaces of the carrier frame sheet body 31.

The antenna pattern 33 is formed of an electrically conductive material (such as at least one of Cu, Al, etc. and an alloy thereof) formed on the carrier frame sheet body 31. The antenna pattern 33 has a loop portion or loop 33a which surrounds the cut-out portion 35a, a loop 33b which surrounds the cut-out portion 35d, and a loop 33c which surrounds the cut-out portion 35c. The loop 33a is electrically interconnected with the loop 33b by an antenna interconnection line 33ab and the loop 33a is electrically interconnected with the loop 33c by an antenna interconnection line 33ac, the loops 33a to 33c being connected in series by the antenna interconnection lines 33ab und 33ac. The cut-out portion 35b is not surrounded by any of the loops 33a to 33c.

With ongoing reference to Figure2, the frame bar 31d is a support frame bar extending between the loop 33c and the loop 33b opposite to the frame bar 31k bordering the loop 33a along a width direction of the antenna tag element 30 and in parallel with the frame bar 31k. The frame bars 31h and 31g are not narrowly cut with respect to line portions of the loops 33a to 33c formed thereon. Accordingly, the frame bars 31h and 31g have a mechanical stabilizing effect for providing increased mechanical stability to the loop 35a. Furthermore, the antenna pattern 33 has antenna terminals for accommodating an RFID chip 37 to be electrically coupled to the antenna terminals of the loop 33a.

The support frame bar 31d may be considered as representing a subset of the plural frame bars 31a to 31k of frame bars and is uncovered by the antenna pattern 33. The uncovered frame bar 31d mechanically connects the frame bar 31f to the frame bar 31e for increasing a self-supporting characteristic of the carrier sheet frame body 31 with antenna pattern 33 such that a kinking of the carrier frame sheet body 31 is avoided where the kinking may be understood as indicating a strong bending of the carrier sheet frame body 31 with potential breaking of the antenna pattern 33 upon such a strong bending of the carrier sheet frame body 31. As shown in Figure2, the frame bar 31d extends in parallel with the frame bar 31c and mechanically connect the loops 33b and 33c along the frame bar 31d in a transverse direction to the frame bars 31f and 31e.

In accordance with illustrative embodiments, the antenna tag element 30 may be laminated into a lamination material 35 over carrier frame sheet body 31 and the antenna pattern 33. The lamination material 35 completely fills the cut-out portions 35a, 35b, 35c, and 35d. The lamination material 35 may be a material compatible with in-molding, i.e., an in-mold material such as polyolefine, polypropylene, polyethylene.

In some illustrative embodiments, the antenna tag element 30 may be an RFID label suitable for in-molding to equip a product (not illustrated) with an RFID label. The antenna tag element 30 laminated into a material such that the occurrence of defects is avoided when subjecting the antenna tag element 30 to an in-molding process. In particular, the portions 35a to 35d do not have air bubbles.

As shown in Figure 2, the frame bars 31a to 31k are narrowly cut-out or substantially congruent with the antenna pattern 33. In other words, each of the frame bars 31a to 31k may have a width dimension of at most 30% or 20% or 35% or 10% or 5% greater than a width dimension of an associated of line portions of the antenna pattern 33. Thus, the frame bars 31a to 31k may substantially match with the antenna pattern 33.

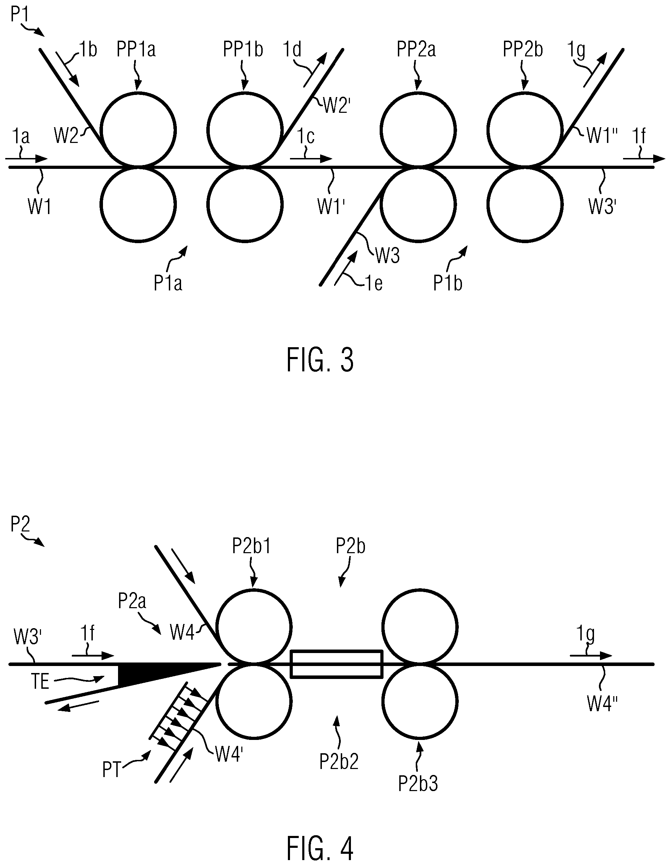

Referring now to Figures 3 and 4, a process in accordance with a method of forming an antenna tag element for in-mold labeling is provided, such as for example of any of the antenna tag elements 10 and 30.

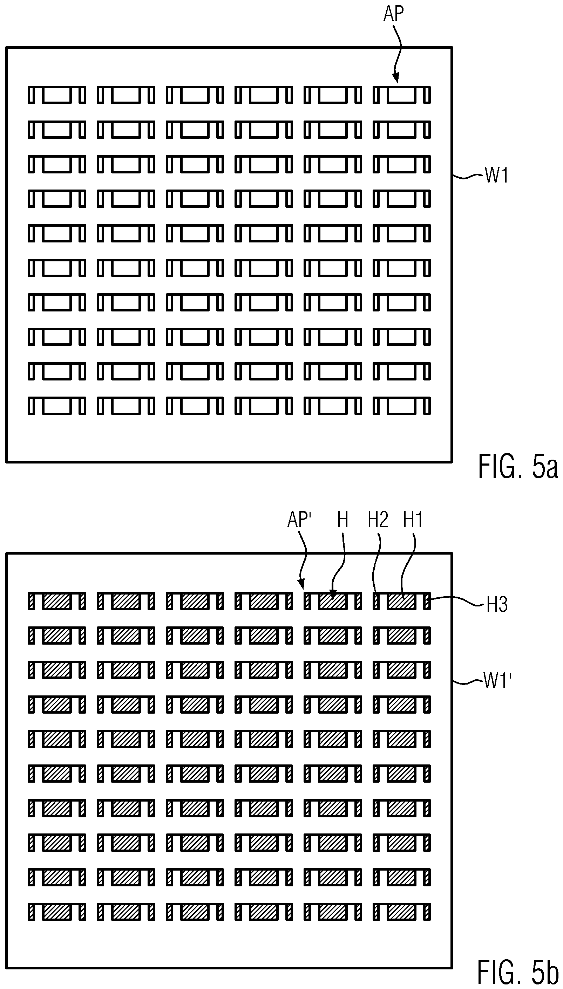

Now referring to Figure 3, an early stage P1 of the process is shown. Initially in the early stage P1, an antenna carrier sheet or web body W1 is provided as indicated by arrow 1a, the antenna carrier sheet or web body W1 being schematically illustrated in Figure 5a.

As shown in Fig. 5a, the antenna carrier sheet or web body W1 comprises a plurality of antenna patterns AP formed on the sheet or web body W1 in a regular pattern. For example, the sheet or web body W1 may be a sheet body having the plurality of antenna patterns AP formed thereon, the sheet body W1 being sheet-wise supplied at the early stage P1. Alternatively, the sheet or web body W1 may be a web body having the plurality of antenna patterns AP formed thereon, the web body W1 representing a portion of a web supplied at the early stage P1, e.g., by a reel (not illustrated) when employed in a reel-to-reel process.

The sheet or web body W1 may represent any of the carrier sheet frame bodies 11 and 31 as described above, however, before being subjected to formation of any cut-out portions and singling out individual antenna patterns. For example, the sheet or web body W1 may be a sheet or web of PET. Alternatively, the sheet or web body W1 may be a sheet or web of paper. However, this does not impose any limitation and the sheet or web body W1 may be any suitable substrate material which may be used for forming an antenna pattern thereon.

In some illustrative examples, the plurality of antenna patterns AP may be formed on the sheet or web body W1 by printing antenna patterns onto the sheet or web body W1 or by depositing a layer of electrically conductive material onto the sheet or web body W1 and etching the deposited layer to form the plurality of antenna patterns AP on the sheet or web body W1. However, this does not impose any limitation and the plurality of antenna patterns AP may be formed by wire embedding technology on the sheet or web body W1.

Referring to Figure 3, an adhesive is provided in a first adhesive applying and punching stage P1a to the antenna carrier sheet or web body W1 on a first side of the antenna carrier sheet or web body W1, e.g., an upper main surface of the antenna carrier sheet or web body W1. As indicated by arrow 1b in Figure 3, the adhesive may be supplied via an adhesive sheet or web W2 having the adhesive on a surface of the adhesive sheet or web W2 facing towards the first side of the antenna carrier sheet or web body W1. For example, the adhesive sheet or web W2 may be supplied to a roller station PP1a of the stage P1, the roller station PP1a of the first adhesive applying and punching stage P1a bringing the adhesive sheet or web 2 with its adhesive carrying side into contact with the first side of the antenna carrier sheet or web body W1 and applying a punching action to the antenna carrier sheet or web body W1 at a second side of the antenna carrier sheet or web body W1 opposite the first side. Generally, the adhesive and punching action are applied to opposite sides of the antenna carrier sheet or web body W1. For example, the punching action may be applied by the lower roller of the roller station PP1a being a punching cylinder applying a punching pattern to the antenna carrier sheet or web body W1 at the second side while applying the adhesive sheet or web W2 with the adhesive from the first side of the antenna carrier sheet or web body W1 pressed against the adhesive sheet or web W2 via the upper roller of the roller station PP1a and vice versa. In some illustrative embodiments, the adhesive may be a thin adhesive film, preferably a low sticky film (that is an adhesive which can be removed without leaving any residue on the first side of the antenna carrier sheet or web body W1 when removing the antenna carrier sheet or web body W1). For example, the web W2 may be a low sticky tape.

After the punching action is terminated and the antenna carrier sheet or web body W1 left the roller station PP1a as the punched antenna carrier sheet or web body W1 in combination with the adhesive sheet or web body W2 attached to the first side, the punched antenna carrier sheet or web body W1 and the adhesive sheet or web body W2 are separated, e.g., at a roller station PP1b terminating the first adhesive applying and punching stage P1a. As indicated via arrow 1d, adhesive sheet or web body W2' obtained after separation from the punched antenna carrier sheet or web body W1 is guided away, while a punched antenna carrier sheet or web body W1' is guided away from the first adhesive applying and punching stage P1a towards a second adhesive applying and punching stage P1b.

Referring to Figure 5b, the punched antenna carrier sheet or web body W1' is illustrated, showing the punched antenna carrier sheet or web body W1' having a plurality of punched antenna patterns AP'. Each punched antenna patterns AP' has a plurality of cut-out portions in form of holes H indicated by hatching in Figure 5b. The holes H comprise holes H1, H2, and H3 representing cut-out portions surrounded by antenna loops. The holes H may correspond to the cut-out portions as described with respect to each of Figures 1 and 2 above.

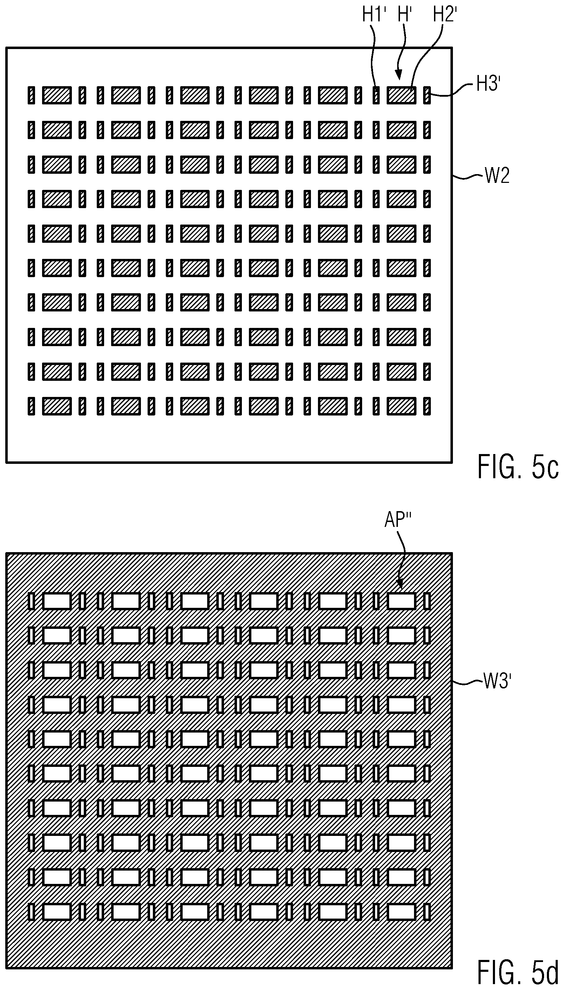

Referring to Figure 5c, the adhesive sheet or web body W2' obtained after separation from the punched antenna carrier sheet or web body W1 is illustrated, showing the cut-out hole portions H' corresponding to the holes H in Figure 5b. Each cut-out hole portion H1', H2', and H3' adheres to the adhesive sheet or web body W2, the adhesive sheet or web body W2' carrying away the cut-out hole portions H' from the punched antenna carrier sheet or web body W1'.

Referring again to Figure 3, another adhesive is provided in a second adhesive applying and punching stage P1b to the antenna carrier sheet or web body W1' on a second side of the antenna carrier sheet or web body W1', e.g., a lower main surface of the antenna carrier sheet or web body W1' opposite the first surface of the antenna carrier sheet or web body W1'. As indicated by arrow 1e in Figure 3, the other adhesive may be supplied via an adhesive sheet or web W3 having the adhesive on a surface of the adhesive sheet or web W3 facing towards the second side of the antenna carrier sheet or web body W1'. For example, the adhesive sheet or web W3 may be supplied to a roller station PP2a of the stage P1, the roller station PP2a of the first adhesive applying and punching stage P1b bringing the adhesive sheet or web W3 with its adhesive carrying side into contact with the second side of the antenna carrier sheet or web body W1' and applying a punching action to the antenna carrier sheet or web body W1' at the first side of the antenna carrier sheet or web body W1' opposite the second side. Generally, the adhesive and punching action are again applied to opposite sides of the antenna carrier sheet or web body W1'. For example, the punching action may be applied by the upper roller of the roller station PP2a being a punching cylinder applying a punching pattern to the antenna carrier sheet or web body W1' at the first side while applying the adhesive sheet or web W3 with the adhesive from the second side of the antenna carrier sheet or web body W1' pressed against the adhesive sheet or web W3 via the lower roller of the roller station PP2a and vice versa.

In some illustrative embodiments, the web W3 may be a low sticky tape. That is, the web W3 may have a low sticky adhesive on its adhesive carrying side, the low sticky adhesive being removable from the antenna carrier sheet without leaving any residue on the antenna carrier sheet.

After the punching action is terminated and the antenna carrier sheet or web body W1' left the roller station PP2a as the punched antenna carrier sheet or web body W1' in combination with the adhesive sheet or web body W3 attached to the second side, the punched antenna carrier sheet or web body W1' and the adhesive sheet or web body W3 are separated, e.g., at a roller station PP2b terminating the second adhesive applying and punching stage P1b. As indicated via arrow 1f, adhesive sheet or web body W3' obtained after separation from the punched antenna carrier sheet or web body W1' is guided away towards a further stage P2 of the process (see Figure 4), while a punched antenna carrier sheet or web body W1" is guided away from the second adhesive applying and punching stage P1b as indicated by arrow 1g in Figure 3. The punched antenna carrier sheet or web body W1" is removed from the process at the end of the stage P1, while adhesive sheet or web body W3' obtained after separation from the punched antenna carrier sheet or web body W1' is transported to the further work stations of the process as will be described in greater detail below.

Referring to Figure 5d, the adhesive sheet or web body W3' obtained after separation from the punched antenna carrier sheet or web body W1' is illustrated, showing a plurality of antenna patterns AP" which are individually cut-out from punched antenna carrier sheet or web body W1" such that the punched antenna carrier sheet or web body W1" is devoid of any antenna pattern and only represents a cut-out frame of antenna carrier sheet or web body material. Each cut-out antenna pattern AP" adheres to the adhesive sheet or web body W3' at the stage 1f in Fig. 3, the adhesive sheet or web body W3' serving as a transporting sheet of web body transporting the cut-out antenna patterns AP" to the next working stages. In view of each of Figures 1 and 2, individual antenna patterns AP" correspond to carrier frame sheet bodies with an antenna pattern formed on at least one main surface of each the carrier-frame body as indicated by elements 11/13 and 31/33 in the description of Figures 1 and 2 above.

As described above with respect to Figure 3, the adhesive sheet or web body W2/W3 corresponds to a cut-out-removing sheet or web supplied to and removed from the first/second side of the antenna carrier sheet or web body.

In the adhesive applying and punching stage P1b, the punching action may be understood as achieving a cutting along cutting lines completely surrounding each antenna pattern of the at least one antenna pattern loop portions for cutting out the antenna pattern from surrounding carrier sheet or web body material, and removing the at least one antenna pattern from cut carrier sheet or web body material by bringing the second side into contact with an antenna pattern support sheet or web supplied to and removed from the second side along with the removed at least one antenna pattern on the antenna pattern support sheet or web.

The stage P1 provides for a two-stage cutting process, comprising a cut-out portion cutting process in accordance with the adhesive applying and punching stage P1a and an antenna pattern cutting process in accordance with the adhesive applying and punching stage P1b in which each antenna pattern of the at least one antenna pattern is cut out from surrounding material of the antenna carrier sheet or web body. In this two-stage cutting process as provided by the stages P1a and P1b completely cut out antenna patterns AP" may be achieved.

Referring now to Figure 4, the adhesive sheet or web body W3' obtained at the end of stage P1 in Figure 3 is supplied to the stage P2 as indicated by arrow 1f in Figure 4. The adhesive sheet or web body W3' guiding the adhesive sheet or web body W3' as an antenna support sheet or web around a turn or kink TE, e.g., a turn edge, reversing an antenna support supply direction by an angle of less than 180°, preferably less than 120° or less than 100° or less than 90° or less than 60° or less than 40° or less than 30° or less than 20° or less than 15° or less than 10°. Upon guiding the antenna support sheet or web W3' around a turn or kink TE, individual antenna patterns AP" are removed from the antenna support sheet or web W3' and handed over to a lamination station P2b applying a lamination process to the individual antenna patterns AP". In using a low sticky tape as web body W3', the individual antenna patterns AP" are handed over without any residue of adhesive film on the individual antenna patterns AP".

The lamination station P2b comprises a roller station P2b1 which supply lamination material by lamination layers W4 and W4' from opposing sides corresponding to the first and second side of the individual antenna patterns AP" so as to arrange the individual antenna patterns AP" in between the lamination layers W4 and W4'. The lamination layers W4 and W4' sandwiching the antenna patterns AP" are guided to a thermal lamination stage P2b2, e.g., two heated plates subjecting heat (and optionally pressure) to the sandwiching arrangement, resulting in a lamination of the individual antenna patterns AP" in between the lamination layers W4 and W4'. The thermal lamination stage P2b2 may be followed by an optional cooling stage P2b3, resulting in the final web or sheet body W4" after the lamination stage P2b is completed. However, this does not impose any limitation and at least one of the rollers P2b1 and P2b3 may be heated rollers instead or in addition to heating plates, possibly including a cooling station (not shown) downstream of the heated rollers.

With ongoing reference to Figure 4, an optional perforation process PT is illustrated for forming a distribution of perforations along the lamination layer W4'. For example, a roller element (not illustrated) with needle elements (not illustrated) may be employed for forming a desired distribution of perforations along the lamination layer W4'. However, it is not implying any limitation and the perforation process PT may form a distribution of perforations along at least one of the lamination sheet layers W4 and W4'. The distribution of perforations may achieve removal of possible air bubbles that may be created in the lamination process.

In some alternative embodiments, the perforation process PT is not present and instead at least one of the lamination layers W4' and W4 may be at least one of a mesh material, a foam material (e.g., a solid foam formed of an open-cell solid foam material) and a fleece material. The material of any kind of mesh, foam, and fleece may based on or formed of a thermoplastic material, such as PP or PE in some illustrative but non-limiting examples. In still some other illustrative embodiments, the mesh, foam, and/or fleece providing at least one of the lamination layers W4' and W4. At least one of the lamination layers W4' and W4 may be be exposed to the perforation process PT to form a distribution of perforations along at least one of the lamination sheet layers W4 and W4'.

In some illustrative embodiments, only one of the lamination layers W4' and W4 may be at least one of a mesh material, a foam material, and a fleece material and subjected to the perforation process PT to improve a degassing through perforations in addition to a degassing effect of the mesh material and/or a foam material and/or fleece material. Alternatively, the other one of the lamination layers W4' and W4, i.e., the lamination layer not comprising mesh material and/or a foam material and/or fleece material, may be subjected to the perforation process PT to improve a degassing through perforations in addition to a degassing effect of the mesh material and/or a foam material and/or fleece material opposite the perforations, while not affecting mechanical stability of the lamination layer comprising mesh material and/or a foam material and/or fleece material. The perforations may provide for a directed degassing on the side of the perforations, e.g., further supported by a gas suction arrangement (not illustrated) only on the side of the perforations.

In some other illustrative embodiments, both of the lamination layers W4' and W4 may be at least one of a mesh material, a foam material, and a fleece material and subjected to the perforation process PT to improve a degassing through perforations in addition to a degassing effect of the mesh material and/or a foam material and/or fleece material. Alternatively, only one of the lamination layers W4' and W4, may be subjected to the perforation process PT to improve a degassing through perforations in addition to a degassing effect of the mesh material and/or a foam material and/or fleece material on the side of the perforations, while not affecting mechanical stability of the lamination layer on the side opposite the perforations. The perforations may provide for a directed degassing on the side of the perforations, e.g., further supported by a gas suction arrangement (not illustrated) only on the side of the perforations.

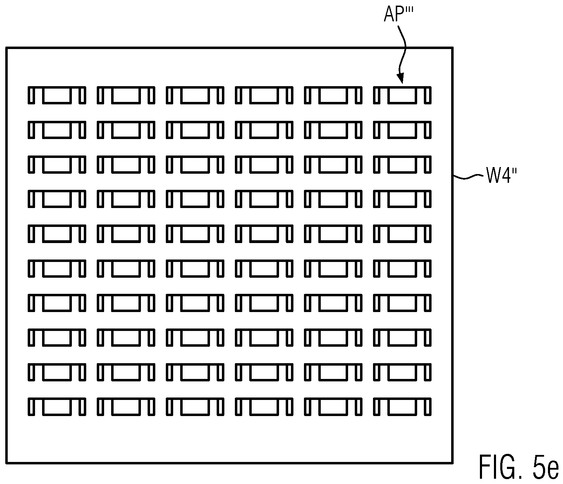

Referring to Figure 5e, the final web or sheet body W4" is illustrated, showing a plurality of antenna patterns AP" which are individually laminated into lamination material. The final web or sheet body W4" may be stored by stacking sheets or winding up the web on a reel so as to provide the final web or sheet body W4" as a reel of laminated antenna patterns AP'".

The final web or sheet body W4" may be cut into individual antenna patterns for providing antenna tag elements in accordance with each of the antenna tag elements 10 and 30 as disclosed above.

Although Fig. 3 to 5e show a specific layout of antenna patterns, this does not imply any limitation and any desired layout of antenna patterns may be realized without affecting the process of stages P1 and P2 described above.

In the description above, cut-out portions are provided, e.g., cut-out portions in Figures 1 and 2 and/or holes in Figure 5b. These cut-out portions or holes represent island holes, which indicate holes or cut-out portions in the carrier frame sheet body or antenna carrier sheet or web body, because each cut-out portion or hole is completely surrounded/delineated by the carrier frame sheet body or antenna carrier sheet or web body. The cut-out portions or holes are not connected, thereby represent island holes. Island holes have the effect of minimizing a surface the carrier frame sheet body or antenna carrier sheet or web body remaining uncovered by the antenna pattern while leaving remaining material providing the carrier frame sheet body or antenna carrier sheet or web body with mechanical stability and self-supporting characteristics to avoid breakage of antenna patterns in the fabrication process before lamination is completed.

At least some of the above embodiments show the following advantages: antenna tag elements as provided in at least some of the embodiments above may be used in a latest/cheapest FC-process on R2R-FC, may be suitable for newest and smaller IC's, may have a higher robustness of the antenna/inlay material, may show a better RFID performance / lower deviation of antenna characteristics, may be suitable for HF antennas, may be equipped with a label content which may be printed possibly after inlay production, and may include low cost PE/PP layers for foil-bag industry existing (R2R).

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately" and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise. "Approximately" or "substantially" as applied to a particular value of a range applies to both values, and unless otherwise dependent on the precision of the instrument measuring the value, may indicate +/- 10% of the stated value(s).

In summary, various embodiments as described herein provide for an antenna tag element for in-mold labeling is provided. The antenna tag element comprises a carrier frame sheet body with an antenna pattern formed on at least one main surface of the carrier-frame body, wherein the carrier frame sheet body has at least one cut-out portion completely removing carrier frame sheet body material between the main surfaces of the body and being completely surrounded by the carrier frame sheet body. The antenna pattern is formed of an electrically conductive material formed on at least one of the main surfaces of the carrier frame sheet body, wherein the antenna pattern has at least one loop portion which surrounds at least one of the at least one cut-out portions. The carrier frame sheet body with the antenna pattern is laminated into a lamination material over the main surfaces of the carrier frame sheet body, the lamination material at least partially filling the at least one cut-out portion.

## Claims

1. An antenna tag element for in-mold labeling, comprising:
a carrier frame sheet body with an antenna pattern formed on at least one main surface of the carrier-frame body,
wherein the carrier frame sheet body has at least one cut-out portion completely removing carrier frame sheet body material between the main surfaces of the body and being completely surrounded by the carrier frame sheet body,
wherein the antenna pattern is formed of an electrically conductive material formed on at least one of the main surfaces of the carrier frame sheet body,
wherein the antenna pattern has at least one loop portion which surrounds at least one of the at least one cut-out portions, and
wherein the carrier frame sheet body with the antenna pattern is laminated into a lamination material over the main surfaces of the carrier frame sheet body, the lamination material at least partially filling the at least one cut-out portion.

2. The antenna tag element of claim 1, wherein the carrier frame sheet body is composed of plural frame bars bordering the at least one cut-out region.

3. The antenna tag element of claim 2, wherein the antenna pattern comprises plural antenna routing portions extending at least partially along each frame bar, wherein each frame bar has a width substantially matching with a width of an associated antenna routing portion.

4. The antenna tag element of one of claims 2 to 3, wherein a subset of the plural frame bars is uncovered by the antenna pattern.

5. The antenna tag element of claim 1, wherein the antenna pattern comprises plural antenna loop portions being electrically connected by plural antenna interconnection lines, wherein at least one antenna interconnection line of the plural antenna interconnection lines extends between two neighboring antenna loop portions.

6. The antenna tag element of claim 5, wherein the antenna pattern has a rectangular shape, wherein the plural antenna loop portions are arranged in a series arrangement along a length direction of the antenna pattern, the antenna interconnection lines connecting two adjacent antenna loops in a series connection.

7. The antenna tag element of claim 5 or 6, wherein at least two adjacent antenna loops are mechanically connected by a frame bar which remains uncovered by the antenna pattern.

8. The antenna tag element of one of claims 1 to 7, wherein the carrier frame sheet body comprises PET and/or paper, and the antenna pattern is formed of an AI and/or Cu routing pattern formed on the carrier frame sheet body.

9. The antenna tag element of one of claims 1 to 8, wherein the lamination material comprises at least one of PP, PE and any plastic material suitable for injection molding, the lamination material preferably being provided by at least one of a mesh material, a foam material, and a fleece material.

10. A method of forming an antenna tag element for in-mold labeling, the method comprising:
providing an antenna carrier sheet or web body with at least one antenna pattern formed on at least one main surface of the carrier-frame sheet body;
subjecting the antenna carrier sheet or web body to a cutting process for forming at least one cut-out portion within one or more antenna loop portions of the at least antenna pattern;
subjecting the antenna carrier sheet or web body to a lamination process subsequent to the cutting process, the lamination process comprising arranging the antenna carrier sheet or web body between to lamination sheet layers and subjecting this arrangement to a fusing process, preferably at least one of the lamination sheet layers being subjected to a perforation process for forming a distribution of perforations along the at least one of the lamination sheet layers.

11. The method of claim 10, wherein the method is employed in a reel-to-reel process with the antenna carrier sheet or web body being provided by supplying an antenna carrier web supplied by a respective carrier web supply reel.

12. The method of claim 10 or 11, wherein the lamination sheet layers are provided as upper and lower lamination sheet material webs supplied by respective lamination material supply reels.

13. The method of one of claims 10 to 12, wherein the cutting process comprises a cut-out portion cutting process and an antenna pattern cutting process in which each antenna pattern of the at least one antenna pattern is cut out from surrounding material of the antenna carrier sheet or web body.

14. The method of claim 13, wherein the cut-out portion cutting process comprises:
providing adhesive on a first side of the antenna carrier sheet or web body;
cutting along cutting lines within the one or more antenna loop portions for cutting out antenna carrier sheet or web body material within the one or more antenna loop portions; and
removing the one or more cut-out antenna carrier sheet or web body materials within the one or more antenna loop portions by bringing the first side into contact with a cut-out-removing sheet or web supplied to and removed from the first side.

15. The method of claim 14, wherein the antenna pattern cutting process comprises:
providing adhesive on a second side of the antenna carrier sheet or web body opposite the first side;
cutting along cutting lines completely surrounding each antenna pattern of the at least one antenna pattern loop portions for cutting out the antenna pattern from surrounding carrier sheet or web body material; and
removing the at least one antenna pattern from cut carrier sheet or web body material by bringing the second side into contact with an antenna pattern support sheet or web supplied to and removed from the second side along with the removed at least one antenna pattern on the antenna pattern support sheet or web.

16. The method of claim 14 or 15, wherein adhesive is provided by the cut-out-removing sheet or web on a surface of the cut-out-removing sheet or web facing towards the first side and/or adhesive is provided by the antenna support sheet or web on a surface of the antenna support sheet or web facing towards the second side, preferably the cut-out-removing sheet or web and/or the antenna support sheet or web being a low-sticky or low-adhesive tape.

17. The method of claim 15 or 16, the method further comprising supplying the at least one antenna pattern to the lamination process via the antenna support sheet or web, guiding the antenna support sheet or web around a turn or kink reversing an antenna support supply direction by an angle of less than 180°, preferably less than 120° or less than 100° or less than 90° or less than 60° or less than 40° or less than 30° or less than 20° or less than 15° or less than 10°.
